# EUROPÄISCHE PATENTANMELDUNG

(11) **EP 2 845 766 A1**
(43) Veröffentlichungstag der Anmeldung: **11.03.2015**
(21) Anmeldenummer: 14180121.7
(22) Anmeldetag: 07.08.2014
(51) Int. Cl.: B60Q 1/40, B60Q 1/34

(54) **Verfahren zur automatischen Abschaltung eines manuell eingeschalteten Fahrtrichtungsanzeigers eines Kraftfahrzeuges**

(30) Priorität: 05.09.2013 DE 102013217776
(71) Anmelder: ROBERT BOSCH GMBH, 70442 Stuttgart (DE)
(72) Erfinder: Kniep, Stefan Andreas, 31134 Hildesheim (DE)

(57) **Zusammenfassung**

Es soll eine Lösung gefunden werden, die ein zu frühes oder zu spätes Abschalten des Fahrrichtungsanzeigers beispielsweise nach einer Kreuzung vermeidet. Dies wird erreicht durch ein Verfahren zur automatischen Abschaltung eines manuell eingeschalteten Fahrtrichtungsanzeigers eines Kraftfahrzeuges, bei dem ein Navigationssystem (21) verwendet wird, um in Abhängigkeit einer als digitale Kartendaten vorhandenen Straßengeometrie und/oder Straßentopologie sowie in Abhängigkeit einer Entfernung des Fahrzeugs zu einem Abbiegepunkt und/oder einer verstrichenen Zeitdauer nach Passieren eines Abbiegepunktes den Fahrtrichtungsanzeiger abzuschalten.

## Beschreibung

### Stand der Technik

Die Erfindung betrifft ein Verfahren zur automatischen Abschaltung eines manuell eingeschalteten Fahrtrichtungsanzeigers eines Kraftfahrzeuges.

Die Erfindung betrifft außerdem eine auf ein derartiges Verfahren bezogene Vorrichtung.

Über einen Hebel am Schaltermodul an der Lenksäule eines Fahrzeuges kann ein Fahrer andere Verkehrsteilnehmer seine zukünftige Fahrtrichtung, beispielsweise das Abbiegen an Kreuzungen, anzeigen. Der Fahrtrichtungsanzeiger wird vor einer Fahrtrichtungsänderung manuell aktiviert. Nach einem Abbiegevorgang wird der Fahrtrichtungsanzeiger in Abhängigkeit des Lenkwinkels zurückgesetzt.

Aus beispielsweise der US-4939540 A oder der US-506863A sind Vorrichtungen bekannt, die den Fahrtrichtungsanzeiger automatisch deaktivieren sobald das Lenkrad vom Fahrer in eine neutrale Stellung bewegt wurde.

Aus der DE 10 2004 030 951 A1 ist außerdem ein Verfahren bekannt, bei der eine Steuerelektronik mit einem Anschluss vorhanden ist, so dass Signale zur Fahrtrichtungsinformation von einem Navigationsgerät aufgenommen werden, damit aufgrund dieser Signale ein Leuchtelement in der Instrumententafel angesteuert wird. Das von der Steuerelektronik angesteuerte Leuchtelement ist ein grünes, herkömmliches Leuchtelement zur Fahrtrichtungsanzeige in der Instrumententafel. Das Navigationsgerät steuert die Blinker des Kraftfahrzeuges direkt ohne eine Blinkerhebelbetätigung des Fahrers. Der Fahrer muss also den Blinkerhebel nicht mehr setzen. Er wird durch das von dem Navigationsgerät aktivierte Aufleuchten des grünen Leuchtelements in Kenntnis gesetzt, dass eine Blinkerseite des Kraftfahrzeuges den bevorstehenden Richtungswechsel anzeigt. Um Fehlfunktionen zu korrigieren, sind Einrichtungen vorgesehen, damit der Fahrer den Blinker selbst wieder ausschalten kann. Auch kann der Blinker in dieser Ausführungsform unabhängig von der Ansteuerung über das Navigationsgerät immer noch vom Fahrzeugführer selbst betätigt werden.

Ein anderes Verfahren zum Rückstellen und/oder Setzen einer Fahrzeugblinkanlage ist in der DE 10 2009 047 436 A1 näher erläutert. Nach abgeschlossenem und/oder bei einem bevorstehenden Richtungswechsel wird die Fahrzeugblinkanlage automatisch zurückgestellt und/oder gesetzt. Um eine exakte automatische Blinkersetzung zu erreichen, wird vorgeschlagen, dass der abgeschlossene und/oder bevorstehende Richtungswechsel aus einem Abgleich von Ortungsdaten des Fahrzeuges mit Kartendaten erkannt wird. Dieses Verfahren soll sich für das Blinken bei einem Spurwechsel eignen. Die Blinkersetzung erfolgt, bis der Spurwechselvorgang abgeschlossen ist. Mittels einer Ortung beziehungsweise einer Position des Fahrzeuges kann ein Vergleich mit einem möglichst detaillierten Kartenmaterial durchgeführt werden. Auf Basis weiterer Informationen, wie beispielsweise der Rangordnung der Straßen, was beispielsweise bei einem Abbiegen in landwirtschaftliche Wege wichtig sein kann, oder dem Vorliegen unterschiedlicher Fahr- und/oder Abbiege- und/oder Abbrems-/beschleunigungsspuren usw. kann genauer ermittelt werden, ob beispielsweise ein Abbiegevorgang abgeschlossen ist und damit der Blinker ausgeschaltet werden kann. Beim Abbiegen an einer Kreuzung soll eine Blinkersetzung erfolgen, bis tatsächlich abgebogen wurde und nicht nur bis von der Geradeausspur auf die Abbiegespur gewechselt wurde. Dies kann dann durch eine Fahrspureingruppierung aus dem Navigations- bzw. Ortungskartenmaterial ergänzt werden. Ein weiteres Beispiel für die Nutzung des Verfahrens ist das Wechseln der Fahrspur auf einer zwei- oder mehrspurigen Straße wie beispielsweise einer Autobahn.

### Offenbarung der Erfindung

Der Erfindung liegt die Aufgabe zugrunde, ein Verfahren zu finden bzw. eine auf ein derartiges Verfahren bezogene Vorrichtung zu schaffen, die ein zu frühes oder zu spätes Abschalten des Fahrrichtungsanzeigers beispielsweise nach einer Kreuzung vermeidet.

Das erfindungsgemäße Verfahren zur automatischen Abschaltung eines manuell eingeschalteten Fahrtrichtungsanzeigers eines Kraftfahrzeuges ist in Anspruch 1 gekennzeichnet, während eine darauf bezogene Vorrichtung im Anspruch 8 gekennzeichnet ist.

Durch die Erfindung wird eine automatische Abschaltung des Fahrtrichtungsanzeigers optimiert, wobei gegenüber einer konventionellen Abschaltung bei Rückkehr des Lenkrads in die neutrale Position durch die Erfindung mehrere fehlerhafte Fälle vermieden wird.

Hierbei können im Wesentlichen zwei Fälle unterschieden werden, d.h. bei der eine Abschaltung ohne die Erfindung entweder zu spät oder zu früh erfolgen würde.

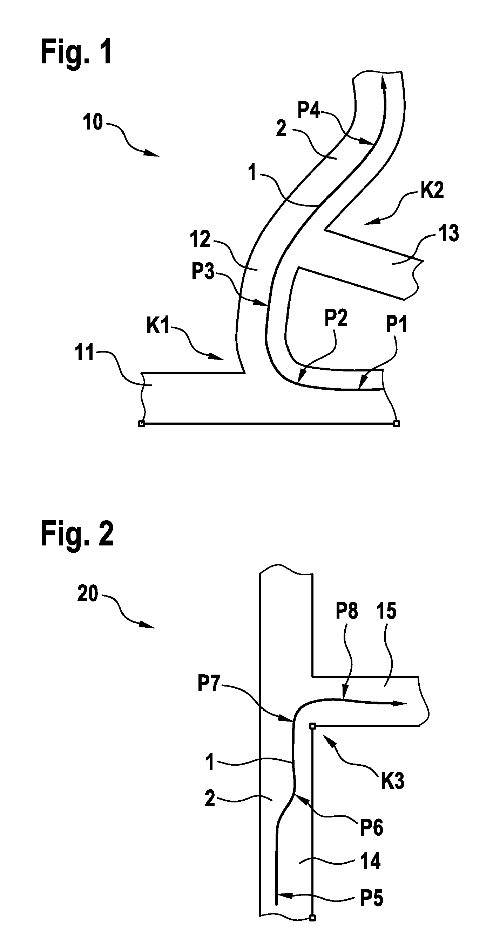

In einem ersten Fall würde eine zu späte Abschaltung erfolgen, weil die Straße beispielsweise nach einem Abbiegepunkt, insbesondere an einer Kreuzung, in derselben Richtung gekrümmt ist wie im Abbiegepunkt selbst, so dass das Lenkrad aufgrund dieser Krümmung erst weit hinter der Kreuzung in die neutrale Stellung zurückkehrt (Fig. 1).

Auch wird ein zweiter Fehlerfall vermieden, bei dem eine zu frühe Abschaltung des Fahrtrichtungsanzeigers erfolgen würde. Es ist nämlich denkbar, dass eine Trajektorie des Fahrzeugs vor dem Abbiegepunkt, aufgrund dessen der Fahrer den Fahrtrichtungsanzeiger betätigt hat, zunächst leicht in dieselbe Richtung gekrümmt ist wie im Abbiegepunkt selbst. Ebenfalls noch vor dem Abbiegepunkt würde die Straße gerade verlaufen oder wäre leicht in die Gegenrichtung gekrümmt (Fig. 2). In diesem Fall würde ohne die Erfindung das Lenkrad noch vor dem Abbiegepunkt in die neutrale Stellung zurückkehren und eine zu frühe Deaktivierung des Fahrtrichtungsanzeigers zu früh erfolgen. Ohne die Erfindung müsste der Fahrer den Fahrtrichtungsanzeiger ein weiteres Mal aktivieren, um den Abbiegevorgang korrekt anzukündigen. Ein solcher Fall tritt zum Beispiel auf, wenn unmittelbar vor einem Abbiegevorgang ein Spurwechsel erfolgt.

Durch die Erfindung wird eine adaptive automatische Abschaltung des Fahrtrichtungsanzeigers auf Basis einer Straßengeometrie und/oder -topologie, welche z.B. vom Navigationssystem beispielsweise über einen elektronischen Horizont bereitgestellt werden, erreicht. Die Abschaltzeitpunkte können so gewählt werden, dass die genannten Probleme selten oder gar nicht auftreten.

Die Daten werden von einem Navigationssystem oder einem anderen Gerät, welches über eine Navigationskarte verfügt, bereitgestellt. Die von Navigationssystem über z.B. einem CAN-BUS bereitgestellten Daten, die nur ein kleiner Ausschnitt der Navigationskarte sind, werden hier als "elektronischer Horizont" bezeichnet. Anstelle eines Navigationssystems kann auch eine andere Kartendaten-Einheit verwendet werden.

Es muss also kein Navigationssystem eingesetzt werden. Beispielsweise ist alternativ eine Positionierungseinheit mit digitaler Karte ist denkbar.

Durch die erfindungsgemäße Auswertung der Straßengeometrie und/oder Straßentopologie und der aktuellen Position des Fahrzeugs kann der Abschaltzeitpunkt in Abhängigkeit von der Entfernung des Fahrzeugs zum Abbiegepunkt gewählt werden. Beispielsweise kann der Fahrtrichtungsanzeiger unabhängig von der Krümmung der Straße schon dann abgeschaltet werden, wenn das Fahrzeug seit dem Abbiegepunkt z.B. 10 Meter zurückgelegt hat oder wenn seit dem Abbiegezeitpunkt z.B. 3 Sekunden verstrichen sind.

Außerdem wird nach der Aktivierung des Fahrtrichtungsanzeigers durch den Fahrer unter Nutzung der Straßengeometrie und/oder Straßentopologie und der aktuellen Position des Fahrzeugs die Kreuzung bestimmt, aufgrund derer der Fahrtrichtungsanzeiger wahrscheinlich aktiviert wurde. Der Fahrtrichtungsanzeiger wird erst dann abgeschaltet, wenn diese Kreuzung passiert wurde. Auf diese Weise wird verhindert, dass der Fahrtrichtungsanzeiger zu früh abgeschaltet wird.

Eine manuelle Abschaltung des Fahrtrichtungsanzeiger wäre insbesondere bei starkem Lenkeinschlag mühsam, weil die Hand am Lenkrad in Richtung des Blinker-Hebels bewegt werden muss. Die vorliegende Erfindung entlastet den Fahrer, weil dieser den Fahrtrichtungsanzeiger seltener ab- bzw. einschalten muss. Die Fahrsicherheit wird erhöht, weil die Signalisierung von Fahrtrichtungsänderungen einfacher wird und dementsprechend häufiger korrekt erfolgt.

Weitere vorteilhafte Ausgestaltungen der Erfindung sind in den Unteransprüchen gekennzeichnet.

Bei einer vorteilhaften Ausführung der Erfindung wird eine Kreuzung, bei der ein automatisches Abschalten erfolgen soll, durch einen manuellen Einschaltvorgang des Fahrtrichtungsanzeigers bestimmt. Das manuelle Setzen des Blinkerhebels bestimmt quasi die im Navigationssystem maßgebliche Kreuzung nach deren Befahren der Fahrtrichtungsanzeiger abgeschaltet werden soll.

Bevorzugterweise jedoch, wird ein automatisches Abschalten unabhängig von einem manuellen Einschaltvorgang des Fahrtrichtungsanzeigers bestimmt. Vorzugsweise erfolgt nämlich ein automatisches Abschalten des Fahrtrichtungsanzeigers in Abhängigkeit einer wahrscheinlichsten Fahrstrecke.

Eine besonders bevorzugte Weiterbildung der Erfindung zeichnet sich dadurch aus, dass ein automatisches Abschalten des Fahrtrichtungsanzeigers in Abhängigkeit einer vom Navigationssystem prognostizierten Fahrzeuggeschwindigkeit erfolgt.

In einer weiteren vorteilhaften Weiterbildung des erfindungsgemäßen Verfahrens ist vorgesehen, dass bei der Bestimmung eines Abschaltzeitpunktes des Fahrtrichtungsanzeigers ein Modell eingesetzt wird, das eine Umgebung des Fahrzeugs repräsentiert. Ein solches Modell wird auch als elektronischer Horizont bezeichnet.

Durch einen sogenannten Horizon Provider können digitale Kartendaten, und zwar die Geometrie und die Topologie in der Umgebung des Fahrzeuges inklusive der aktuellen Position des Fahrzeuges und der voraussichtlichen Fahrstrecke, die der Fahrer wählen wird, bereitgestellt werden. Diese voraussichtliche Fahrstrecke wird "Most Probable Path" (MPP) genannt. Ein möglicher Horizon Provider ist das Navigationssystem des Fahrzeuges.

Es können verschiedene Arten der Kodierung des elektronischen Horizontes durch den sogenannten Horizon Provider genutzt werden. Für die vorliegende Erfindung ist die Art der Kodierung jedoch nicht relevant, so dass im Grunde eine einfache Kodierung verwendbar ist. In dieser Kodierung besteht die topologische Information des elektronischen Horizontes aus Kreuzungen und aus Straßen, die Kreuzungen verbinden. Die geometrische Information enthält unter anderem die Positionen der Kreuzungen. Anhand dieser Daten kann der Abstand des Fahrzeuges zu Kreuzungen entlang des MPPs bestimmt werden. Der elektronische Horizont beinhaltet vorzugsweise auch Prognosen über die Geschwindigkeiten, mit denen die jeweiligen Straßenabschnitte befahren werden. Anhand dieser Geschwindigkeiten kann die Zeit bestimmt werden, die bis zum Erreichen einer Kreuzung ungefähr verstreichen wird und es kann gemessen werden, wie viel Zeit seit dem Passieren einer Kreuzung ungefähr vergangen ist. Die Genauigkeit, mit der die Zeiten und Abstände berechnet werden können, hängt maßgeblich von der Genauigkeit der digitalen Karte und der Ortungskomponente ab, welche im Horizon Provider verwendet werden.

Ein elektronischer Horizont ist im Grunde ein Modell, mit dem digitale Kartendaten in der Umgebung des Fahrzeugs repräsentiert werden, insbesondere auch die Attribute der Fahrstrecke, die der Fahrer voraussichtlich wählen wird, wie beispielsweise aus der EP-1775552 A2 bekannt ist.

Es kann eine Einheit "Meter" verwendet werden, um Abstände zwischen zwei Punkten im Straßennetz zu definieren. An jeder dieser Stellen kann ebenfalls ein Zeitmaß oder eine gewichtete Kombination aus einem Längenmaß und einem Zeitmaß verwendet werden. Bei der Verwendung eines Zeitmaßes, z.B. Sekunden, ist mit dem Abstand die voraussichtliche Zeit gemeint, die das Fahrzeug unter Verwendung der prognostizierten Geschwindigkeiten benötigen würde, um vom ersten zum zweiten Punkt zu gelangen. Die Entfernung zwischen zwei Kreuzungen kann als euklidischer Abstand zwischen den Zentren der beiden Kreuzungen definiert werden, welche im elektronischen Horizont angegeben sind.

Bei einer bevorzugten Vorrichtung mit Mitteln zum Ausführen des erfindungsgemäßen Verfahrens wird ein Blinker-Steuergerät eingesetzt, das mit einer Auswerteeinheit verbunden ist.

Vorzugsweise wird eine der folgenden Verfahrensvarianten verwendet:
A) Die Kartendaten-Einheit, z.B. ein Navigationsgerät, umfasst die Auswerteeinheit. In diesem Fall wird kein Horizon Provider benötigt, weil die Kartendaten nicht übertragen werden müssen und nur intern in der Kartendaten-Einheit verarbeitet werden.
B) Das Blinkersteuergerät umfasst die Auswerteeinheit. Im diesem Fall wird ein Horizon Provider auf dem Navigationsgerät und ein sogenannter Horizon Reconstructor auf dem Blinkersteuergerät benötigt.
C) Ein drittes Steuergerät umfasst die Auswerteeinheit und übermittelt das Signal zur Abschaltung des Blinkers an das Blinkersteuergerät. In diesem Fall wird analog zum Fall B ein Horizon Provider auf dem Navigationsgerät und ein Horizon Reconstructor auf dem dritten Steuergerät benötigt.

Zur Realisierung der Erfindung in einer Vorrichtung kann das Blinker-Steuergerät nämlich über einen Fahrzeugbus mit einem Horizon Provider verbunden werden. Der Horizon Provider kann z.B. eine Head-Unit sein. Head-Units stellen einen elektronischen Horizont z.B. gemäß dem ADASIS V2 Standard bereit und können diese Funktion deshalb übernehmen. Die Auswertung des elektronischen Horizonts erfolgt auf dem Blinker-Steuergerät. Wenn die Auswertung des elektronischen Horizonts nicht auf dem Blinker-Steuergerät erfolgen kann, z.B. aufgrund mangelnder Hardware-Ressourcen, ist es denkbar, dass die Auswertung auch auf der Head-Unit selbst erfolgt. In diesem Fall kann nur ein einziges Signal "Fahrtrichtungsanzeiger deaktivieren" über den Fahrzeugbus an das Blinker-Steuergerät gesendet werden. Allerdings muss in der Head-Unit auch das Signal, dass das Lenkrad in die neutrale Stellung bewegt wurde, zur Verfügung stehen. Dieses könnte z.B. ebenfalls über den Fahrzeugbus übertragen werden oder über eine direkte Verbindung mit einem entsprechenden Sensor.

Ein Ausführungsbeispiel wird anhand der Zeichnungen näher erläutert, wobei weitere vorteilhafte Weiterbildungen der Erfindung und Vorteile derselben beschrieben sind.

Es zeigen:
- Fig. 1: eine Darstellung eines ersten Straßenverlaufs mit einer Fahrstrecke, mit konventioneller Blinkerbetätigung,
- Fig. 2: eine Darstellung eines zweiten Straßenverlaufs mit einer weiteren Fahrstrecke, mit konventioneller Blinkerbetätigung,
- Fig. 3: ein Ablaufdiagramm zur Ausführung einer bevorzugten Variante des erfindungsgemäßen Verfahrens,
- Fig. 4: ein Blockschaltbild mit einem Navigationsgerät und einer Blinkersteuerung, die miteinander durch einen Fahrzeugbus verbunden sind, und
- Fig. 5: eine Verbindung eines sogenannten ADAS Horizon Provider über einen CAN-Bus mit verschiedenen Reconstructor-Einheiten.

Die Figuren 1 und 2 veranschaulichen zwei Situationen, in denen die herkömmliche Deaktivierung des Fahrtrichtungsanzeigers nicht, wie gewünscht, funktioniert. Die Linien 1 stellen die Trajektorie eines Fahrzeugs dar, wobei die Fahrbahn 2 erkennbar ist.

Fig. 1 zeigt ein erstes Beispiel eines Abbiegevorgangs, bei dem gemäß einer konventionellen Betätigung des Fahrtrichtungsanzeigers eine automatische Abschaltung des Fahrtrichtungsanzeigers bei Rückkehr des Lenkrads in die neutrale Position nicht funktioniert. In Fig. 1 ist eine erste Kreuzungssituation 10 dargestellt, mit einer ersten Straße 11 und einer zweiten, rechts folgenden Straße 12. Die Straße 12 hat einen gekrümmten Verlauf. Charakteristisch sind die Punkte P1 bis P4.

Der Punkt P1 entspricht der Stelle, an der der Fahrer den Fahrtrichtungsanzeiger manuell aktiviert.

Der Punkt P2 entspricht der Stelle, an der der Abbiegevorgang des Fahrzeugs beginnt. Der Punkt P3 entspricht der Stelle, an der der Fahrtrichtungsanzeiger eigentlich deaktiviert werden sollte. Der Punkt P4 entspricht der Stelle, an der der Fahrtrichtungsanzeiger bei konventioneller Abschaltung tatsächlich deaktiviert wird, d.h. zu spät deaktiviert wird.

Durch die Erfindung wird der Fahrtrichtungsanzeiger bereits im Punkt P3 deaktiviert.

In dem in der Fig. 1 gezeigten Fall würde also eine Abschaltung zu spät erfolgen, weil die Straße nach dem Abbiegepunkt P2, d.h. nach der Kreuzung K1, in derselben Richtung gekrümmt ist wie im Abbiegepunkt P2 selbst. Das Lenkrad kehrt aufgrund dieser Krümmung erst weit hinter der Kreuzung in die neutrale Stellung zurück. Möglicherweise passiert das Fahrzeug eine weitere Kreuzung, wie in Fig. 1 veranschaulicht ist, ohne an dieser abzubiegen, bevor die automatische Abschaltung des Fahrtrichtungsanzeigers erfolgt. Wenn der Fahrer den Fahrtrichtungsanzeiger vor dieser Kreuzung K1 nicht manuell deaktiviert, werden die Fahrer anderer Fahrzeuge fälschlicherweise annehmen, dass das Fahrzeug erneut abbiegen wird, und zwar in die Straße 13.

Im zweiten, in der Fig. 2 gezeigten, Fall mit der Kreuzungssituation 20 kann die Trajektorie des Fahrzeugs vor einem Abbiegepunkt P7, aufgrund dessen der Fahrer den Fahrtrichtungsanzeiger betätigt hat, zunächst leicht in dieselbe Richtung gekrümmt sein wie im Abbiegepunkt P7 selbst. Die Kreuzung K3 umfasst die Straßen 14 und 15.

Im Punkt P5 wird der Fahrtrichtungsanzeiger durch den Fahrer aktiviert. Im Punkt P6 wird der Fahrtrichtungsanzeiger automatisch deaktiviert, d.h. zu früh deaktiviert. P8 kennzeichnet den Punkt, an dem der Fahrtrichtungsanzeiger eigentlich deaktiviert werden sollte.

Ebenfalls noch vor dem Abbiegepunkt P7 verläuft die Straße gerade, wie Fig. 2 veranschaulicht, oder ist leicht in die Gegenrichtung gekrümmt (nicht gezeigt). In diesem gezeigten Fall kehrt das Lenkrad noch vor dem Abbiegepunkt P7 in die neutrale Stellung zurück, so dass eine Deaktivierung des Fahrtrichtungsanzeigers zu früh erfolgt. Hier muss der Fahrer den Fahrtrichtungsanzeiger ein weiteres Mal aktivieren, um den Abbiegevorgang korrekt anzukündigen. Ein solcher Fall tritt zum Beispiel auf, wenn unmittelbar vor einem Abbiegevorgang ein Spurwechsel erfolgt.

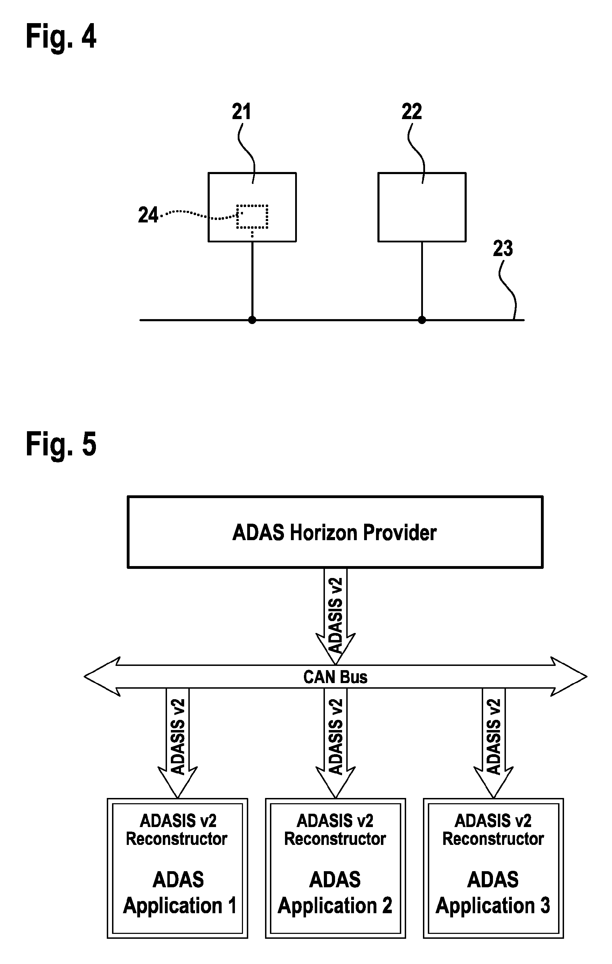

Durch die Erfindung ist eine adaptive automatische Abschaltung des Fahrtrichtungsanzeigers auf Basis der Straßengeometrie und/oder -topologie, welche von einem Navigationssystem 21 oder Navigationsgerät (Fig. 4) bzw. von einem elektronischen Horizont bereitgestellt werden, möglich. Die Abschaltzeitpunkte werden so gewählt, dass die anhand der Figuren 1 und 2 erläuterten Probleme nicht mehr auftreten.

Erfindungsgemäß wird zur automatischen Abschaltung eines manuell eingeschalteten Fahrtrichtungsanzeigers eines Kraftfahrzeuges das Navigationssystem 21 verwendet, um in Abhängigkeit einer als digitale Kartendaten vorhandenen Straßengeometrie und/oder Straßentopologie, die z.B. in den Figuren 1 und 2 veranschaulicht ist, sowie in Abhängigkeit einer Entfernung des Fahrzeugs zu einem Abbiegepunkt und/oder einer verstrichenen Zeitdauer nach Passieren eines Abbiegepunktes den Fahrtrichtungsanzeiger abzuschalten.

Die Kreuzung, bei der ein automatisches Abschalten erfolgen soll, wird unabhängig von einem manuellen Einschaltvorgang des Fahrtrichtungsanzeigers bestimmt. Ein automatisches Abschalten des Fahrtrichtungsanzeigers erfolgt in Abhängigkeit einer wahrscheinlichsten Fahrstrecke, z.B. einer vom Navigationssystem 21 berechnete Fahrroute. Vorzugsweise erfolgt ein automatisches Abschalten des Fahrtrichtungsanzeigers in Abhängigkeit einer vom Navigationssystem 21 prognostizierten Fahrzeuggeschwindigkeit. Bei der Bestimmung eines Abschaltzeitpunktes des Fahrtrichtungsanzeigers wird ein Modell eingesetzt, das eine Umgebung des Fahrzeugs repräsentiert, wobei das Modell z.B. ein elektronisches Horizont-Modell ist.

Fig. 4 zeigt, dass ein Blinker-Steuergerät 22 mit einer Auswerteeinheit 24, die im Navigationssystem 21 integriert sein kann, verbunden ist. Die Auswerteeinheit 24 ist durch einen Fahrzeugbus 23 mit dem Blinker-Steuergerät 22 verbunden.

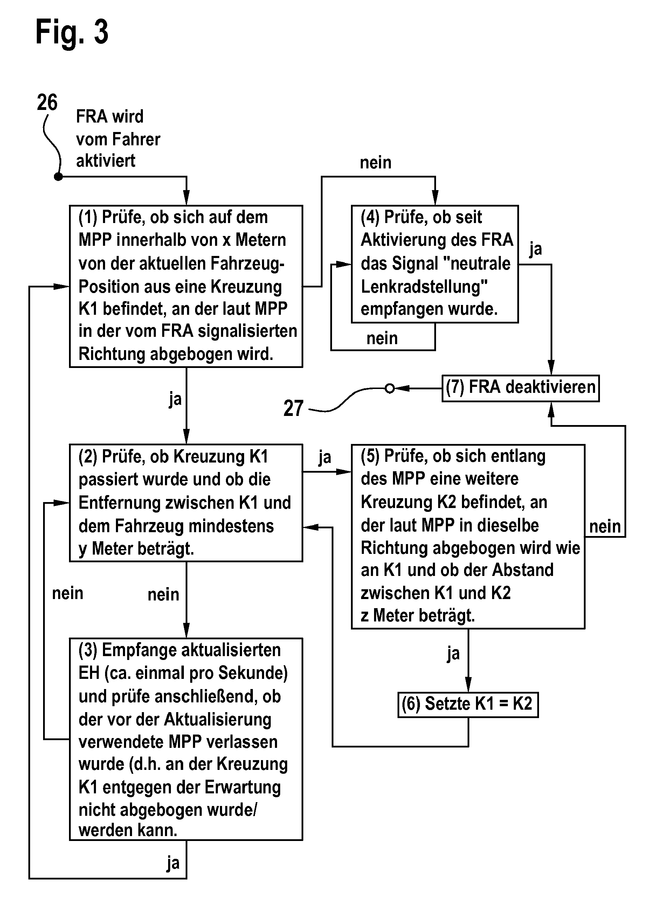

In Fig. 3 ist der Ablauf nach einer Variante des Verfahrens in einem Zustandsdiagramm dargestellt. Das Verfahren beginnt, sobald der Fahrtrichtungsanzeiger vom Fahrer aktiviert wurde (schwarzer Kreis 26). Das Verfahren endet, sobald der Fahrtrichtungsanzeiger deaktiviert wurde (weißer Kreis 27). Der Abstand zur zurückliegenden Kreuzung, ab dem der Fahrtrichtungsanzeiger automatisch deaktiviert wird, kann durch einen Parameter (y) definiert werden.

Wenn der Fahrer den Fahrtrichtungsanzeiger erst kurz vor oder während eines Abbiegevorgangs aktiviert, kann es vorkommen, dass die entsprechende Kreuzung bei der Auswertung der Bedingung im Schritt 1 laut einer wahrscheinlichsten Fahrstrecke "Most Probable Path" (MPP) schon passiert wurde und dementsprechend sofort im Schritt 4 gewechselt wird. Um dieses Problem zu beheben, kann im Schritt 1 auch ein kurzes Stück des bereits zurückgelegten Weges auf Kreuzungen überprüft werden, die möglicherweise der Auslöser für die Aktivierung des Fahrtrichtungsanzeigers (FRA) waren. Wenn der MPP aufgrund einer falschen Prognose des Horizon Providers verlassen wurde, sorgt Schritt 3 dafür, dass das Verfahren mit dem neuen MPP (welcher vom Horizon Provider nach dem Verlassen des bisherigen MPP bereitgestellt wird) sofort neu gestartet wird, ohne dass der Fahrtrichtungsanzeiger (FRA) zwischendurch deaktiviert wird. Damit wird der Fall adressiert, dass an zwei dicht aufeinanderfolgenden Kreuzungen laut MPP an der ersten, tatsächlich aber erst an der zweiten Kreuzung abgebogen wird.

Die Anzahl der Wechsel von Schritt 3 in Schritt 1 könnte begrenzt werden, um zu verhindern, dass der Fahrtrichtungsanzeiger (FRA) an einer langen Folge von Kreuzungen, an denen entgegen dem MPP jeweils nicht abgebogen wird, zu lange aktiviert bleibt (z.B. nach einem Spurwechsel). Wenn der Fahrtrichtungsanzeiger aktiviert wurde und laut MPP in den nächsten x Metern keine Abbiegung erfolgt, sorgt Zustand 4 dafür, dass der Fahrtrichtungsanzeiger abgeschaltet wird, sobald das Lenkrad in die neutrale Stellung bewegt wurde. Dies entspricht dem Verhalten der herkömmlichen Deaktivierung des Blinkers und kommt z.B. bei einem Spurwechsel zur Anwendung. Dabei wird vorausgesetzt, dass ein Signal von einem Lenkwinkelsensor empfangen wird, wenn das Lenkrad von einer eingeschlagenen Stellung in die neutrale Stellung bewegt wird. Es ist zu beachten, dass die Deaktivierung des Fahrtrichtungsanzeigers in Schritt 4 auch rückwirkend erfolgt. Wenn Schritt 4 z.B. aufgrund eines Fehlers erreicht wird, sich das Lenkrad aktuell nicht in der neutralen Stellung befindet, sich nach der Aktivierung des Fahrtrichtungsanzeigers aber schon dort befand, dann wird der Fahrtrichtungsanzeiger sofort automatisch deaktiviert.

Wenn der Fahrer, wie prognostiziert, an einer Kreuzung abgebogen ist und an einer dicht darauffolgenden weiteren Kreuzung voraussichtlich in dieselbe Richtung abbiegen wird, sorgen die Schritte 5 und 6 dafür, dass der FRA zwischen den beiden Kreuzungen nicht deaktiviert wird. Der maximale Abstand zwischen den Kreuzungen kann durch den Parameter z eingestellt werden. Wenn während des Ablaufs des Verfahrens ein Fehler auftritt, zum Beispiel während der Auswertung des elektronischen Horizonts, dann wird unabhängig vom aktuellen Zustand im Schritt 4 gewechselt (in Fig. 3 nicht dargestellt). Somit wird der Fahrtrichtungsanzeiger im Fehlerfall spätestens dann deaktiviert, wenn der Fehler aufgetreten ist und die neutrale Lenkradstellung seit Aktivierung des Fahrtrichtungsanzeigers mindestens einmal erreicht wurde. Wenn der Fahrer den Fahrtrichtungsanzeiger manuell deaktiviert, bevor Schritt 7 erreicht wurde, dann wird das Verfahren sofort beendet (in Fig. 3 ebenfalls nicht dargestellt). Es wird vorausgesetzt, dass bei einem Wechsel der durch den Fahrtrichtungsanzeiger angezeigten Richtung durch den Fahrer (z.B. von "rechts" auf "links") erst das Signal "neutrale Lenkradstellung" empfangen wird, woraufhin das Verfahren beendet wird und danach mit der geänderten Richtung neu gestartet wird.

Die Parameter x, y und z werden gemäß des gewünschten Verhaltens des Systems zur Ausführung des Verfahrens gewählt, eventuell auch in Abhängigkeit von einem Fahrerprofil. Es ist möglich, dass ein Horizon Provider das Signal des Fahrtrichtungsanzeigers nutzt, um den MPP zu bestimmen bzw. zu beeinflussen. Bei einer Umsetzung des Verfahrens ist sicherzustellen, dass sich hieraus keine ungewollten Effekte ergeben. Ein Beispiel für einen solchen Effekt ist, dass der Blinker aufgrund des aktuellen MPPs automatisch abgeschaltet wird, wobei der MPP aufgrund dieser Abschaltung verändert wird. Damit die Abschaltzeitpunkte so gewählt werden können wie beschrieben, muss ein zuverlässiger MPP bereitgestellt werden, d.h. die Wahrscheinlichkeit muss hoch sein, dass der bereitgestellte MPP vom Fahrer tatsächlich gewählt wird. Wenn der Horizon Provider verschiedene mögliche Pfade liefert, welche sich bezüglich der für das Verfahren aus Fig. 3 benötigten Daten unterscheiden und wenn keiner dieser Pfade laut den vom Horizon Provider gelieferten Wahrscheinlichkeiten mit wesentlich höherer Wahrscheinlichkeit eintritt als die anderen Pfade, dann kann das Verfahren vorübergehend deaktiviert werden.

Fig. 5 veranschaulicht eine Verbindung eines sogenannten ADAS Horizon Provider über einen CAN-Bus mit verschiedenen Reconstructor-Einheiten.

Die Erfindung ist nicht auf dieses Beispiel beschränkt, so könnte das Verfahren so ausgeführt sein, dass die Abschaltzeitpunkte rein geometrisch durch die Analyse von Krümmungen und Wendepunkten des MPP berechnet werden.

## Patentansprüche

1. Verfahren zur automatischen Abschaltung eines manuell eingeschalteten Fahrtrichtungsanzeigers eines Kraftfahrzeuges, bei dem Daten aus einer digitalen Straßenkarte verwendet werden, um in Abhängigkeit von der Straßengeometrie und/oder Straßentopologie sowie in Abhängigkeit einer Entfernung des Fahrzeugs zu einem Abbiegepunkt und/oder einer verstrichenen Zeitdauer nach Passieren eines Abbiegepunktes den Fahrtrichtungsanzeiger abzuschalten.

2. Verfahren nach Anspruch 1, **dadurch gekennzeichnet, dass** eine Kreuzung, bei der ein automatisches Abschalten erfolgen soll, durch einen manuellen Einschaltvorgang des Fahrtrichtungsanzeigers bestimmt wird.

3. Verfahren nach Anspruch 1, **dadurch gekennzeichnet, dass** eine Kreuzung, bei der ein automatisches Abschalten erfolgen soll, unabhängig von einem manuellen Einschaltvorgang des Fahrtrichtungsanzeigers bestimmt wird.

4. Verfahren nach Anspruch 3, **dadurch gekennzeichnet, dass** ein automatisches Abschalten in Abhängigkeit einer wahrscheinlichsten Fahrstrecke erfolgt.

5. Verfahren nach einem der vorhergehenden Ansprüche, **dadurch gekennzeichnet, dass** ein automatisches Abschalten des Fahrtrichtungsanzeigers in Abhängigkeit einer von einem Navigationssystem (21) oder einer anderen Einheit prognostizierten Fahrzeuggeschwindigkeit erfolgt.

6. Verfahren nach einem der vorhergehenden Ansprüche, **dadurch gekennzeichnet, dass** bei der Bestimmung eines Abschaltzeitpunktes des Fahrtrichtungsanzeigers ein Modell eingesetzt wird, das eine Umgebung des Fahrzeugs repräsentiert.

7. Verfahren nach einem der vorhergehenden Ansprüche , **dadurch gekennzeichnet, dass** Daten von einem Navigationssystem oder von einem anderen Gerät, welches über eine Navigationskarte verfügt oder von einer anderen Kartendaten-Einheit, bereitgestellt werden, wobei die Daten, die nur ein kleiner Ausschnitt der Navigationskarte sind.

8. Vorrichtung mit Mitteln zum Ausführen des Verfahrens nach einem der vorhergehenden Ansprüche, **gekennzeichnet durch** ein Blinker-Steuergerät (22), das mit einer Auswerteeinheit (24) verbunden ist.

9. Vorrichtung nach einem der vorhergehenden Ansprüche , **dadurch gekennzeichnet, dass** eine Kartendaten-Einheit eine Auswerteeinheit umfasst oder dass ein Blinkersteuergerät eine Auswerteeinheit umfasst oder dass ein Steuergerät eine Auswerteeinheit umfasst.

10. Vorrichtung nach Anspruch 8 oder 9, **dadurch gekennzeichnet, dass** die Auswerteeinheit (24) durch einen Fahrzeugbus (23) mit dem Blinker-Steuergerät (22) verbunden ist.
